# EUROPEAN PATENT APPLICATION

(11) **EP 1 163 968 A2**
(43) Date of publication of application: **19.12.2001**
(21) Application number: 00202375.2
(22) Date of filing: 05.07.2000
(51) Int. Cl.: B23K 1/00, B21D 53/00

(54) **Joining part for welded joint between heat transfer plates in plate heat exchanger**

(30) Priority: 16.06.2000 FI 20000253 U
(71) Applicant: RACERT OY, 11120 Riihimäki (FI)
(72) Inventor: Raunio, Pentti, 11120 Riihimäki (FI)
(74) Representative: Heinänen, Pekka Antero

(57) **Abstract**

Joining part (2) for a welded joint between heat transfer plates (1) in a plate heat exchanger, said joining part serving to join stacked heat transfer plates (1) to each other and said joining part (2) being mounted between the edge portions of the stacked heat transfer plates (1), whereby said joining part (2) is solidly melted with the metal of the heat transfer plates (1) during the seam welding process. The invention is implemented by making the joining part (2) from a raw material of a different composition than that used for making said heat transfer plates (1).

## Description

The present invention relates to a joining part for a welded joint between heat transfer plates in a plate heat exchanger, said joining part serving to join stacked heat transfer plates to each other and said joining part being mounted between the edge portions of stacked heat transfer plates, whereby said joining part is solidly melted with the metal of the heat transfer plates during the seam welding process.

The joining part is used in welded plate heat exchangers for filling the gap that remains at the edge portions of the heat transfer plates due to the corrugation of the plates. An example of this type of heat exchanger construction is disclosed in Fl patent publication no. 79,409, whose one preferred embodiment includes the joining part as a portion of the construction. The edges of the heat transfer plates are united with the help of the joining part by way of melting the joining parts and the plate edges together, thus forming the primary and secondary chambers of the heat exchanger that are leak-proof, separated from each other and isolated from the exterior space. Heat transfer takes place between these chambers.

The chambers in plate heat exchangers made by welding without using a joining part are manufactured by uniting the plates directly together with welded seams. In one embodiment, the edge portions of the heat exchanger plates are pleated so that they can be united by way of melting the plate edges with each other using, e.g., the TIG welding method. In this arrangement, the plate edges are accurately aligned with each other simultaneously applying a clamping force thereon, whereby a seam is produced that can be made by melting the metals of the plate edges from a direction perpendicular to the plane of the plate surfaces.

In the art is also known a joining method of heat transfer plates in which method two different edge portions of the adjoining plate pair are superimposed so that the edge portions of the plates mate tightly with each other. Herein, the plate edges can be united using a laser welding method directed from a perpendicular direction to the plane of the plate surfaces. Then, the seam is formed by melting through one of the plate surfaces and the melt reaches the underlying plate to be united.

Another technique for uniting the superimposed heat transfer plates pairwise to each other is to use a welding method such as the TIG method, for instance, directed from a direction parallel to the plane of the plate surfaces.

All of the above described embodiments are characterized in that the welded seam is produced by melting the metals of two heat transfer plates of identical material with each other. As the thicknesses of heat transfer plates are generally in the order of 0.7 - 0.8 mm in this kind of weld, it is advantageous to unite the plates using the minimum possible welding energy level to assure a good quality of the welded seam.

However, welding of two pieces of identical material to each other is hampered by the fact that the corrosion resistance of the base material is thereby reduced due to the segregation of alloying components in the melted material. Particularly prone to segregation is chromium, whereby the welded material develops chromium-lean areas that are particularly sensitive to corrosion. In the laser welding method, this problem is less severe. However, the latter method is handicapped by the narrow seam width available at the welded joint.

In the art, the corrosion problem particularly in conjunction with so-called stainless and acid-proof steel grades relates to stress, crevice and pit corrosion phenomena. A welded joint invariably lowers the attack threshold of these corrosion forms below that of the base material used as the heat transfer plate. Operating conditions reaching the critical region of corrosion attack may occur frequently in situations that are considered to be safe in regard to corrosion. An example of such a case is the heating of tap water for the hot tap water circuit of building. Even under normal circumstance, hot tap water heated above 100 °C begins to be corrosive to so-called acid-proof steel grades (e.g., AISI316L). The situation is aggravated if, e.g., the steam valve at the primary heating side of the heat exchanger is leaky and thus at least temporarily causes overheating of stagnant hot tap water in the heat exchanger. A similar situation may occur due to pressure loss of the building's hot-water circuit during, e.g., servicing operations, whereby the primary circuit steam can bring the hot tap water contained in the heat exchanger to a boiling condition. Resultingly, the hot-water circuit may extremely rapidly accumulate a hard crust of calcareous and salt depositions under which corrosion may attack particularly invoked by chloride ions. The situation may be further worsened by fast temperature variations such as those caused by a suddenly increased hot tap water consumption. Simultaneously, the system is also subjected to violent pressure shocks that may act as factors initiating stress corrosion. Also changes occurring in the external conditions have subjected materials to more aggressive corrosion as it has been found that the chloride ion content of tap water has increased, chiefly due to the use of salt in winter-time road maintenance. Furthermore, a great number of industrial processes are either being developed or already converted into closed water systems due to environmental protection reasons. Hence, stricter demands are imposed on materials currently used in heat exchangers.

One factor that additionally elevates the above-described risks is the relatively small volume of the heat transfer chambers in welded plate heat exchangers in relation to the thermal throughput of the heat exchanger. The situation is entirely new as compared with old-fashioned tubular-type heat exchangers in which the large volume of the exchanger chamber(s) can buffer sudden changes such as those caused by rapid closing of valves in the secondary hot tap water circuit that are fast as compared with the automatically controlled slow closing/opening of valves in the primary heating circuit.

It is an object of the present invention to provide a welded joint between heat transfer plates by virtue of the above-mentioned joining part so that the thus formed welded joint is less problematic than prior-art joints in regard to corrosion. The goal of the invention is achieved by a construction characterized in that the joining part is made from a raw material having a composition different from that of the heat transfer plates.

A preferred embodiment of the invention is characterized in that the joining part is made from a grade of austenitic stainless steel different from that used for the heat transfer plates.

Another preferred embodiment of the invention is characterized in that the joining part is made from a grade of austenitic stainless steel having a higher corrosion resistance than the corrosion resistance of the austenitic stainless steel used in the manufacture of the heat transfer plates.

Accordingly, the invention discloses a cost-advantageous method for lowering the above-described risk of corrosion. In practice, this has a strong impact on the manufacturing costs of a heat exchanger, since system designers and end users are generally reluctant to afford the high extra expenses resulting from the choice of a steel grade of improved corrosion resistance as the overall construction material of the entire heat exchanger. Even a small upgrade of material quality may readily make the material costs of a heat exchanger more than two-fold. Moreover, the availability of special materials can easily become a complicated issue.

In the following, the invention will be described in greater detail by making reference to the appended drawings in which
FIG. 1 shows a top view of a heat transfer plate of a plate heat exchanger and a joining part placed on the edge thereof;
FIG. 2 shows a sectional view taken along line C-C of FIG. 1;
FIG. 3 shows a sectional view taken along line D-D of FIG. 1;
FIG. 4 shows a sectional and partially exploded view taken along line B-B of FIG. 1; and
FIG. 5 shows a grading tree of austenitic stainless steels.

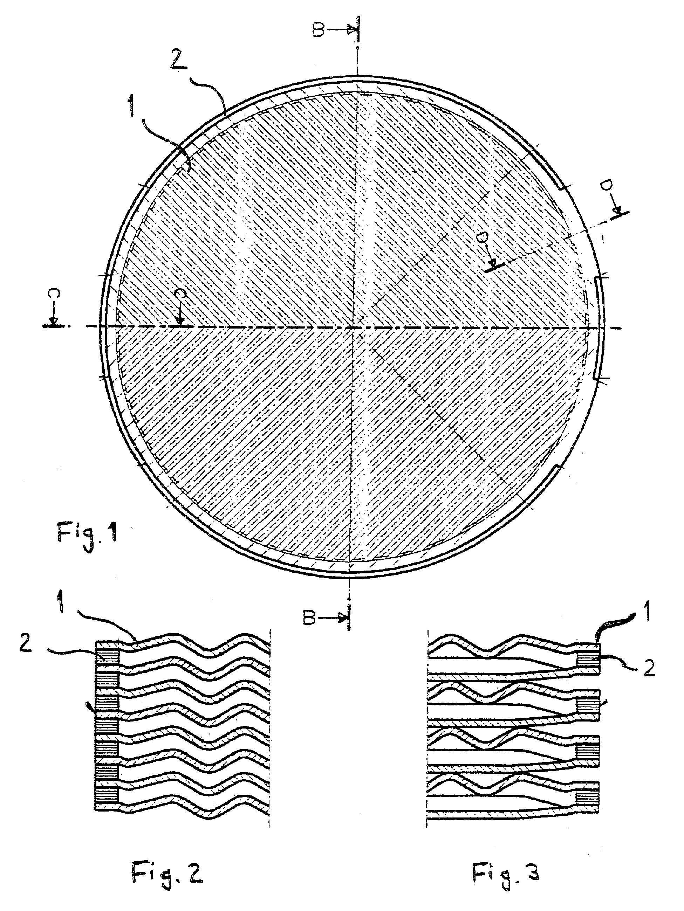

As mentioned above, the basic construction of the heat exchanger according to the invention is already described in Fl Pat. No. 79,409. For assembly, the edge of a heat transfer plate 1 has a joining part 2 attached thereto by, e.g., spot welding. When stacked tightly above one another, the heat transfer plates 1 with the joining parts 2 attached thereto can be assembled into a heat exchanger (FIGS. 2 and 3) in which the primary and secondary heat exchanger chambers with spaces separated from each other are formed in a conventional manner. The leak-proof tightness between the chambers and also to the exterior side is assured by welding the plate edges with the interleaved joining parts into a flawless integral seam using a mechanized welding technique.

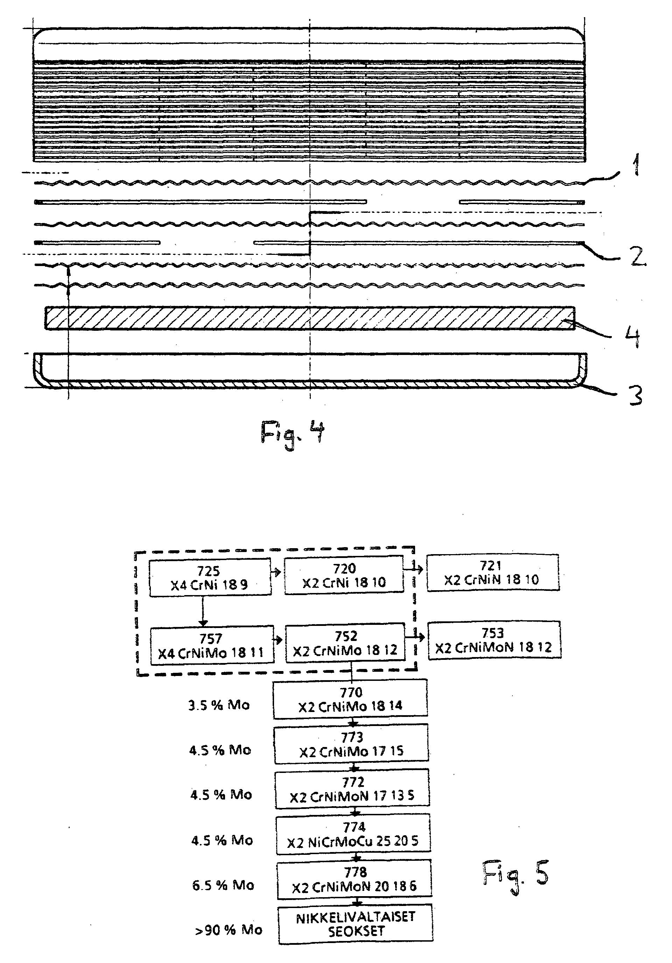

In FIG. 4 are shown in more detail the components required in this type of heat exchanger. In the same fashion as in the above description, a heat transfer plate is designated by reference numeral 1 and a joining part by reference numeral 2. An end bell of the heat exchanger is designated by reference numeral 3 and a reinforcing plate by reference numeral 4.

In the embodiment according to the invention, the joining part 2 is made from a material having a higher resistance to different types of corrosion than the material used for the heat transfer plates 1. Most appropriately, the joining part 2 may be made from a wire of circular cross section into its final shape by rolling or, alternatively, by cutting from a sheet metal material using any of different techniques known in the art.

Both the heat transfer plate 1 and the joining part 2 are advantageously made from an austenitic stainless steel. These grades of austenitic stainless steels offer an improved resistance to general corrosion, pit corrosion, crevice corrosion and stress corrosion as can be seen from the so-called grading tree shown in FIG. 5. The earlier mentioned austenitic grade (ALSI316L) having a composition of 18Cr 8Ni 2.5Mo may be considered as one of the basic grades in the grading tree, as it has molybdenum added thereto for improved corrosion resistance. The corrosion resistance of the grades listed in the evolution tree of steels increases downward along the tree. Accordingly, the invention is based on making the joining part 2 from a steel grade having a corrosion resistance higher than that of the steel grade used for making the heat transfer plate 1. In other words, the material of the joining part 2 along the grading tree is located below the material used for making the heat transfer plate

To those skilled in the art, it is obvious that the invention is not limited to the above-described exemplifying embodiments, but rather, may be modified within the scope of the appended claims.

## Claims

1. Joining part (2) for a welded joint between heat transfer plates (1) in a plate heat exchanger, said joining part serving to join stacked heat transfer plates (1) to each other and said joining part (2) being mounted between the edge portions of the stacked heat transfer plates (1), whereby said joining part (2) is solidly melted with the metal of the heat transfer plates (1) during the seam welding process, **characterized**in that said joining part (2) is made from a raw material of a different composition than that used for making said heat transfer plates (1).

2. Welded joint of heat transfer plates according to claim 1, **characterized**in that said joining part (2) is of an austenitic steel that is of a different grade than the grade used for making said heat transfer plates (1).

3. Welded joint of heat transfer plates according to claim 2, **characterized**in that said joining part (2) is of an austenitic stainless steel that has a higher corrosion resistance than the corrosion resistance of the austenitic stainless steel used for making said heat transfer plates (1).
